## Europäisches Patentamt

(19) **European Patent Office**

**Office européen des brevets**

(11) Veröffentlichungsnummer: **0 031 627**
**B1**

(12) **EUROPÄISCHE PATENTSCHRIFT**

(45) Veröffentlichungstag der Patentschrift:
**29.05.85**

(21) Anmeldenummer: **80201226.0**

(22) Anmeldetag: **22.12.80**

(51) Int. Cl.⁴: **B 62 M 3/02**

(54) **Tretkurbel für Fahrräder.**

(30) Priorität: **27.12.79 SE 7910658**

(43) Veröffentlichungstag der Anmeldung:
**08.07.81 Patentblatt 81/27**

(45) Bekanntmachung des Hinweises auf die Patenterteilung:
**29.05.85 Patentblatt 85/22**

(84) Benannte Vertragsstaaten:
**AT BE CH DE FR GB IT LI LU NL**

(56) Entgegenhaltungen:
**EP - A - 0 019 420**
**FR - A - 824 430**
**FR - A - 2 319 820**

(73) Patentinhaber: **Dieter, Herbert, Lyckevägen 11,**
**S-430 91 Hönö (SE)**

(72) Erfinder: **Dieter, Herbert, Lyckevägen 11, S-430 91 Hönö**
**(SE)**

(74) Vertreter: **Roth, Ernst Adolf Michael et al, GÖTEBORGS**
**PATENTBYRA AB Box 5005, S-402 21 Göteborg (SE)**

## Beschreibung

Die vorliegende Erfindung betrifft eine Tretkurbel für Fahrräder mit — ihrer wirksamen Länge nach — variablen Tretkurbelarmen und je einer Pedale sowie Pedalachse, die an dem Tretkurbelarm befestigt und in verschiedenen wahlbaren Stellungen gegenüber des Befestigungszapfens des Tretkurbelarms einstellbar ist.

Um ein optimales Resultat beim Radrennen erreichen zu können würden, mit Rücksicht auf die Kondition des Radfahrers und örtliche Gegebenheiten variable Tretkurbelarmlängen von Vorteil sein. Mit kürzeren Tretkurbelarmen ist es leichter zu Spurten, während längere Tretkurbelarme, d. h. ein größerer Momentarm, es leichter macht Steigungen zu nehmen. Da bei Straßenrennen diese verschiedenen Situationen laufend wechseln, ist es nicht möglich Tretkurbelarme verschiedener Länge je nach der auftretenden Situation zu verwenden. Bisher gab es nur die Möglichkeit Tretkurbelarme einer festen Länge einzubauen, und da die Montage und Demontage eine zeitraubende und umständliche Prozedur ist, kann diese während des Rennens nicht durchgeführt werden.

Die üblichsten Längen von Tretkurbelarmen betragen zwischen 165—180 mm mit je einem Intervall von 2,5 mm. Die gewöhnlichste »Kompromißlänge« zwischen diesen beiden Grenzmassen ist 172,5 mm und wenn ein Rennfahrer andere Tretkurbelarmelängen wünscht, wählt er in erster Linie einen Kurbelarm von 170 bzw. 175 mm Länge.

Die Übersetzung eines Fahrradgetriebes wird seit jeher in englischen Zoll angegeben, wobei der Durchmesser des Hinterrades mit der Zahl der Zähne des Vorderen Zahnrades multipliziert und durch die Zahl der Zähne des hinteren Kettenkranzes dividiert. Mit 53 Zähnen des vorderen Zahnrades, einen Raddurchmesser von 27 Zoll und 13 Zähnen des hinteren Zahnkranzes wird eine Übersetzung von 110 Zoll erhalten. Wird der hintere Zahnkranz mit einem Zahn auf 14 Zähne erweitert, beträgt die Übertragung 102 Zoll. Ein Rennfahrer weiß wie groß der Unterschied zwischen diesen beiden Gängen (Zahnräder mit 13 bzw. 14 Zähnen) ist, da es aber keine Einstellmöglichkeiten zwischen 110 und 102 gibt kann er nur einen dieser beiden Gänge wählen.

Durch die schwedische Patentschrift SE-A-115 676 ist entsprechend dem Oberbegriff des Anspruchs 1 eine Vorrichtung zur Änderung der wirksamen Länge des Tretkurbelarmes für Fahrräder bekanntgeworden, mit welcher Vorrichtung jedoch eine 2-Gangschaltung beabsichtigt ist. Mit dieser Vorrichtung wird eine Verlängerung des Tretkurbelarmes von etwa 68 mm erhalten, wenn angenommen wird daß die feste Tretkurbelarmlänge 172,5 mm beträgt, während die kürzeste Länge des Tretkurbelarmes 104,5 mm beträgt. Eine zu große bzw. zu kleine kreisförmige Bewegungsbahn der Pedale ist für den Bewegungsablauf der Beine jedoch ungünstig. Da andere Verstellmöglichkeiten nicht vorhanden sind und die bauliche Ausführung so gestaltet ist daß der Verstellarm auch nicht Zwischenstellungen einnehmen kann, ist diese bekannte Übersetzung für Rennfahrräder geradezu ungeeignet.

Für einen Rennradfahrer sind schon 8 Zoll (der Unterschied zwischen oben erwähnten 110 und 102 Zoll) von einem Gang zum anderen in gewissen Fällen schwer zu verkraften und es ist Aufgabe dieser Erfindung einen Weg anzuzeigen wie auf einfache Weise das Problem auch Zwischenwerte zwischen den Gängen zu erhalten gelöst wird. Dabei soll durch einfache Verstellungsmanöver, die während des Fahrradfahrens durchgeführt werden können, ganz nach Wunsch die Übersetzung den örtlichen Gegebenheiten und der gegenwärtigen Muskelkondition genau angepaßt werden können. Diese Aufgabe wurde dadurch gelöst, daß die Pedalachse einstückig in Form einer Kurbelwelle ausgebildet ist, deren erster Kurbelzapfen auf an sich bekannte Weise in Lagerungen der Pedale und deren zweiter Kurbelzapfen in einer Lagerung im Tretkurbelarm drehbar ist, daß der erste Kurbelzapfen mit eienr Freilaufnabe zusammenwirkt, die beim Vorwärtstreten Freilaufstellung einnimmt und beim Rückwärtstreten den ersten Kurbelzapfen drehfest mit der Pedale verbindet, und daß auf den zweiten Kurbelzapfen ein Drehwiderstand wirkt, wodurch auf bekannte Weise, durch Federkraft oder dergleichen, der zweite Kurbelzapfen in verschiedene, vorgegebene Winkellagen gegenüber dem Tretkurbelarm einstellbar ist.

Weitere Merkmale der Erfindung ergeben sich aus den Ansprüchen, der Beschreibung und der Zeichnung, in welcher ein Ausführungsbeispiel des Erfindungsgegenstandes dargestellt ist. Es zeigen:

Fig. 1 einen Längsschnitt durch ein Fahrradpedal mit einem Teil eines Tretkurbelarmes gemäß der Erfindung.

Fig. 2 zeigt einen Teil des Tretkurbelarmes in Seitenansicht.

Fig. 3 veranschaulicht einen Schnitt nach der Linie III-III in der Fig. 1.

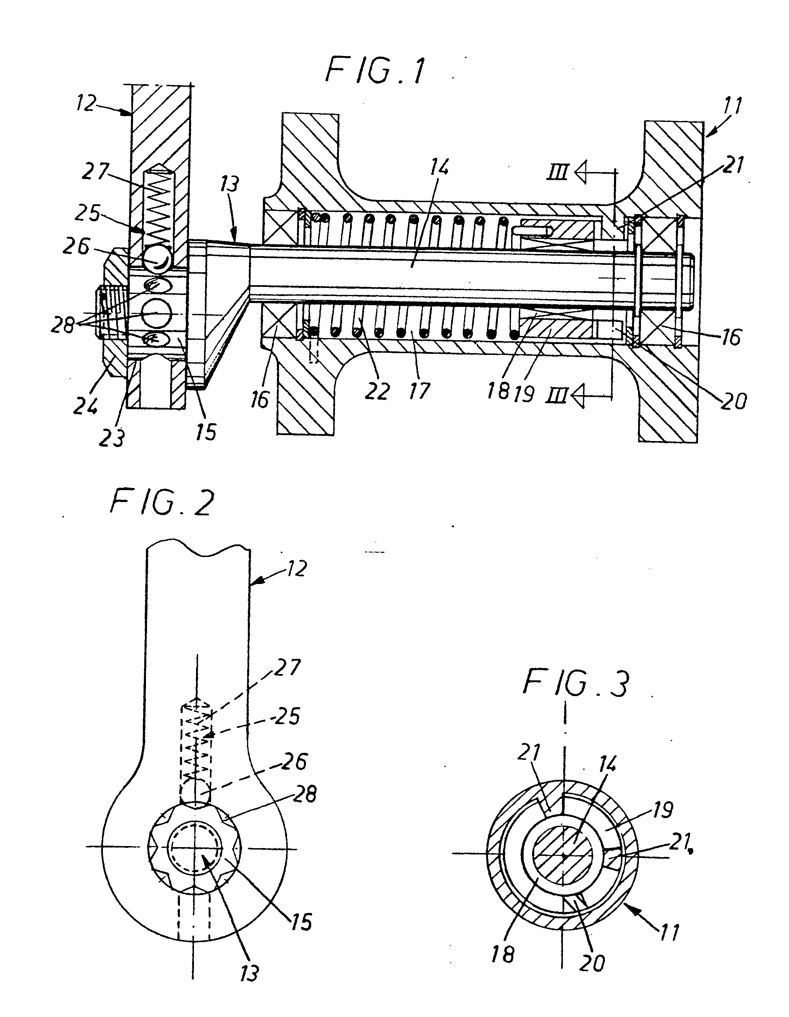

Auf den Zeichnungen wird mit 11 ein Fahrradpedal, mit 12 ein Tretkurbelarm und mit 13 eine Pedalachse bezeichnet. Diese ist als Kurbelwelle ausgebildet, welche einen längeren Kurbelzapfen 14 und excentrisch gegenüber diesem einen etwas kürzeren Kurbelzapfen 15 besitzt. Der längere Kurbelzapfen 14 ist über Lagerungen 16 in einer Bohrung 17 in dem Pedal 11 drehbar gelagert. Auf der Pedalachse ist weiter eine Freilaufnabe 18 angeordnet, auf die eine Büchse 19 aufgesetzt ist, die an einer Stirnseite einen Vorsprung 20 besitzt, welcher mit zwei in der Bohrung 17 des Pedals vorgesehenen Anschlägen 21 zusammenwirkt. Wie aus Fig. 3 hervorgeht sind die Anschläge so angeordnet, daß die Büchse etwa eine $3/4$ Umdrehung entgegen der Wirkung einer Feder 22 gedreht werden kann. Das eine Ende der Feder 22 ist mit der Büchse fest verbunden, während das entgegengesetzte Ende in der Bohrung 17 des Pedals verankert ist. Die Freilaufnabe 18 ist so ausgebildet, daß diese freie Drehung der Pedalachse 13 in einer Umdrehungsrichtung zuläßt, während in entgegengesetzter Richtung die Pedalachse 13 gegenüber der Büchse 19 arretiert ist.

Der zweite, kürzere Kurbelzapfen 15 der Pedalachse 13 ist, wie bereits erwähnt, exzentrisch gegenüber dem längeren, ersten Kurbelzapfen 14 angeordnet, wobei die Exzentrizität etwa zwischen 6—10 mm ist. Der Tretkurbelarm 12 ist in einer Gleitlagerung 23 auf dem zweiten Kurbelzapfen 15 drehbar gelagert und gegen axiale Verschiebung durch eine Mutter 24 fixiert. In dem Tretkurbelarm 12 ist ein federbelasteter Drehwiderstand 25 angeordnet, welcher aus einer Kugel 26 besteht, die von einer Feder 27 gegen den Kurbelzapfen 15 gedrückt wird und dabei in Vertiefungen 28 auf der Mantelfläche des Zapfens einrastet. Die Kraft der Feder 27 ist so bemessen, daß ein genügend großer Drehwiderstand erhalten wird, um den Kurbelzapfen 15 in seiner gewählten Position gegenüber dem Tretkurbelarm 12 zu halten. Beim Vorwärtsfahren, d. h. wenn der Tretkurbelarm 12 eine Kreisbewegung im Uhrzeigersinn ausführt, wird der erste Kurbelzapfen 14 sich in den Lagerungen 16 des Pedals drehen, während der zweite Kurbelzapfen 15 gegenüber dem Tretkurbelarm 12 stillsteht. Bei Rücktritt arretiert die Freilaufnabe 18 den ersten Kurbelzapfen 14 gegenüber der Büchse 19, so daß bei weiterer Rücktrittbewegung der Vorsprung 20 der Büchse 19 gegen einen der Anschläge 21 stößt. Bei noch weiterer Rücktrittbewegung der Pedalachse 13 dreht sich der zweite Kurbelzapfen 15 in der Lagerung 23 des Tretkurbelarmes entgegen der Wirkung des Drehwiderstandes 25, bis die Kugel 26 in die nächste Vertiefung 28 einrastet.

Da eine Verstellung der Pedalachse erst nach einer 3/4 Rückwärtsdrehung des Pedals erfolgt, werden unerwünschte Verstellungen durch zufälliges Rückwärtstreten vermieden. Außerdem kann auch stehend der Tretkurbelantrieb des Fahrrades angetrieben werden, ohne daß dadurch unerwünschte Verstellungen der Pedalachse 13 erfolgen.

Sobald der Tretkurbelarm in Vorwärtsrichtung gedreht wird, wird die Büchse 19 durch die Feder 22 in ihrer Ausgangsstellung zurückgedreht, so daß beim nächsten Rücktritt des Tretkurbelarmes eine neue begrenzte Bewegung ausgeführt werden kann.

Nicht nur verschiedene Übersetzungen können mit der Längenveränderung des Tretkurbelarmes 12 erreicht werden, sondern gleiche Übersetzungen mit verschiedenen Tretkurbelarmlängen können gefahren werden. Der Radfahrer braucht für eine Bergaufstrecke beispeilsweise eine Tretkurbelarmlänge von 175 mm, auf flacher Straße eine Armlänge von 172,5 mm während er bergab eine Länge von 170 mm wählt. Erfindungsgemäß ist es außerdem möglich Zwischenstellungen zwischen diesen angegebenen Massen einzustellen so daß der Radrennfahrer genau die Einstellung wählen kann, die für seine Muskel noch vertretbar ist. Es ist wissenschaftlich festgestellt, daß müde Muskeln andere Pedalkreisbahnen verlangen als ausgeruhte Muskeln und es ist auch bekannt daß ein Muskel bei steigender Form längere Tretkurbelarme braucht. Wie sich die Formkurve eines Rennradfahrers jedoch verändert weiß man nie im voraus und durch die erfindungsgemäße Ausbildung ist es nun erstmalig möglich bei Leistungsschwankungen die richtige Tretkurbelarmlänge zu wählen.

Die Erfindung ist nicht auf das dargestellte Ausführungsbeispiel begrenzt, sondern eine Mehrzahl Variationen im Rahmen der Patentansprüche sind denkbar. So kann der an sich bekannte Drehwiderstand 25 auf andere Weise ausgebildet sein. Zum Beispiel kann der Drehwiderstand außerhalb des Tretkurbelarmes angeordnet sein, wobei der zweite Kurbelzapfen 15 anstatt mit einem Gewindezapfen mit einem im Querschnitt viereckigen Zapfen versehen ist, welcher direkt oder über eine viereckige Scheibe mit einem mit entsprechender Ausnehmung ausgebildeten Federblech zusammenwirkt, daß bei jeder Viertelumdrehung die Pedalachse 13 arretiert.

**Patentansprüche**

1. Tretkurbel für Fahrräder mit — ihrer wirksamen Länge nach — variablen Tretkurbelarmen (12), und je einem Pedal sowie einer Pedalachse (13), die an dem Tretkurbelarm (12) befestigt und in verschiedenen wahlbaren Stellungen gegenüber des Befestigungszapfens (15) des Tretkurbelarms einstellbar ist, dadurch gekennzeichnet, daß die Pedalachse (13) einstückig in Form einer Kurbelwelle ausgebildet ist, deren erster Kurbelzapfen (14) in an sich bekannter Weise in Lagerungen (16) der Pedale (11) und deren zweiter Kurbelzapfen (15) in einer Lagerung (23) im Tretkurbelarm (12) drehbar ist, daß der erste Kurbelzapfen (14) mit einer Freilaufnabe (18) zusammenwirkt, die beim Vorwärtstreten Freilaufstellung einnimmt, und beim Rückwärtstreten den ersten Kurbelzapfen (14) drehfest mit dem Pedal (11) verbindet, und daß auf den zweiten Kurbelzapfen (15) ein Drehwiderstand (25) wirkt, wodurch auf bekannte Weise, durch Federkraft oder dergleichen, der zweite Kurbelzapfen (15) in verschiedene, vorgegebene Winkellagen gegenüber dem Tretkurbelarm (12) einstellbar ist.

2. Vorrichtung nach Anspruch 1, dadurch gekennzeichnet, daß die Freilaufnabe (18) in einer in dem Pedal (11) begrenzt drehbaren Büchse (19) angeordnet ist, die entgegen der Wirkung einer Feder (22) zwischen zwei Endlagen drehbar ist, welche in dem Pedal (11) vorgesehene mit der Büchse zusammenwirkende Anschläge (21) sind.

## Claims

1. A pedal for bicycles with — as to its length — variable pedal arms (12), and each having a pedal and a pedal shaft (13), wich is attached to the pedal arm (12) adjustable to different optional positions relative to the attachment pin (15) of the pedal arm, characterized thereby, that the pedal shaft (13) is shaped in one piece as a crankshaft, a first crank pin (14) of which in a manner known per se, is rotatable in bearings (16) in the pedal (11) and the second crank pin (15) is rotable in a bearing (23) in the pedal shaft (12), that the first crank pin (14) cooperates with a freewheel hub (18), which at a forward pedaling motion takes up a frewheel position, and which at reaward pedaling motion interconnects the first crank pin and the pedal (11) in a non-rotatable manner, and that a torsional resistance (25) acts upon the second crank (15), whereby in a manner known per se, by means of spring force or the like, the second crank pin (15) is adjustable to different, predetermined angular positions relative to the pedal arm (12).

2. A device according to claim 1, characterized thereby, that the freewheel hub (18) is arranged in sleeve (19), which sleeve is pivotable between two end position against the action of a spring (22), said end positions being stops (21) arranged in the pedal (11) and cooperating with the sleeve.

## Revendications

1. Manivelle de pédalier pour bicyclette comportant un bras de manivelle (12) variable suivant sa longuer efficace, et une pédale ainsi qu'un axe de pédale (12), qui est fixée sur le bras de manivelle de pédalier, (12) et réglable en différentes positions au choix par rapport au tourillon de fixation (15), caractérisée en ce que l'axe de pédale (13) est conçu d'un seul tenant sous la forme d'un arbre de manivelle, dont un premier tourillon (14) est monté en rotation, de façon connue en soi, dans des paliers (16) de le pédale (11), tandis que le deuxième tourillon de manivelle (15) est monté pivotant dans unpalier (23) du bras de manivelle (12), que le premier tourillon de manivelle (14) coopére avec un moyeu de roue libre (18), qui lorsqu'on pédale vers l'avant, prend une position de roue libre, et, lorsqu'on pédale vers l'arrière, connecte à rotation le premier tourillon de manivelle (14) avec la pédale (11), et qu'on organe résistant à la rotation (25) agit sur le deuxième tourillon de manivelle (15), ce dernier étant réglable de façon connue, par action d'un ressort ou analogue, en différentes position angulaires prédéterminées par rapport au bras de manivelle (12).

2. Dispositif selon la revendication 1, caractérisé en ce que le moyeu de roue libre (18) est disposé dans un manchon rotatif (19) logé dans la pédale (11), et qui peut pivoter à l'encontre de l'action d'un ressort (22) entre deux paliers d'extrémité qui sont prévus dans la pédale (11) avec des butées (21) coopérant avec le manchon.

FIG.1

FIG.2

FIG.3